# EUROPÄISCHE PATENTANMELDUNG

(11) **EP 3 104 314 A1**
(43) Veröffentlichungstag der Anmeldung: **14.12.2016**
(21) Anmeldenummer: 16171277.3
(22) Anmeldetag: 25.05.2016
(51) Int. Cl.: G06Q 10/04

(54) **SYSTEM UND VERFAHREN ZUR WARNUNG VOR LOKALEN HOCHWASSEREREIGNISSEN**

(30) Priorität: 10.06.2015 DE 102015109208
(71) Anmelder: Deutsches Zentrum für Luft- und Raumfahrt e.V., 51147 Köln (DE)
(72) Erfinder: Krauß, Thomas, 86830 Schwabmünchen (DE); Fischer, Peter, 85283 Niederlauterbach (DE); Taubenböck, Hannes, 81541 München (DE); Wurm, Michael, 80335 München (DE)
(74) Vertreter: Rösler, Frank

(57) **Zusammenfassung**

Die Erfindung betrifft ein System und ein Verfahren zur Warnung vor lokalen Hochwasserereignissen auf einem Teil der Erdoberfläche. Das vorgeschlagene System umfasst ein erstes Mittel (101) zur Bereitstellung eines digitalen 3D-Geländemodells des Teils der Erdoberfläche, ein zweites Mittel (102) zum Prädizieren eines zeitlichen Verlaufs einer flächigen Verteilung von Regenmengen R(t₁, x, y), die auf dem Teil der Erdoberfläche niedergehen, wobei t eine aktuelle Zeit, t₁ eine Zeit im Intervall zwischen der aktuellen Zeit t und einem vorgegebenen zukünftigen Zeitpunkt t + Δt angibt: t₁ ∈ [t, ..., t+Δt], und (x, y) Koordinaten von Punkten auf dem Teil der Erdoberfläche angeben, ein drittes Mittel (103) zur Ermittlung eines prädizierten zeitlichen Verlaufs einer flächigen Wasserstandsverteilung WV(t₁, x, y) auf dem Teil der Erdoberfläche auf Basis des 3D-Geländemodells und der prädizierten örtlichen Regenmengen R(t₁, x, y), und ein viertes Mittel (104) zur Ausgabe einer Warnung WAR dann, wenn die Wasserstandverteilung WV(t₁, x, y) im betrachteten prognostizierten Zeitverlauf [t, ..., t+Δt] einen von für den Teil der Erdoberfläche lokal vorgegebenen Grenzwert G(x, y) übersteigt, wobei die angeführten Mittel zum Datenaustausch miteinander vernetzt sind.

## Beschreibung

Die Erfindung betrifft ein System und ein Verfahren zur Warnung vor lokalen Hochwasserereignissen auf einem Teil der Erdoberfläche.

Die möglichst präzise Vorhersage und die Warnung vor Hochwasserereignissen, die sich aufgrund starker Regenniederschläge (d.h. in flüssigem Aggregatszustand) auf der Erdoberfläche ergeben, ist insbesondere bei den aktuell zu beobachtenden global zunehmenden extremen Wetterereignissen eine wichtige Voraussetzung zum Schutz von Menschenleben und Objekten.

Die Aufgabe der Erfindung ist es, ein System und ein Verfahren anzugeben, das die Vorhersage von lokalen Hochwasserereignissen auf der Erdoberfläche durch Regenniederschläge verbessert, somit eine schnellere und präzisere Warnmeldung ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Aufgabe wird durch ein System zur Warnung vor lokalen Hochwasserereignissen auf einem Teil der Erdoberfläche gelöst. Das vorgeschlagene System umfasst ein erstes Mittel zur Bereitstellung eines digitalen 3D-Geländemodells des Teils der Erdoberfläche, ein zweites Mittel zum Prädizieren eines zeitlichen Verlaufs einer flächigen Verteilung von Regenmengen R(t₁, x, y), die auf dem Teil der Erdoberfläche niedergehen, wobei t eine aktuelle Zeit, t₁ eine Zeit im Intervall zwischen der aktuellen Zeit t und einem vorgegebenen zukünftigen Zeitpunkt t + Δt angibt: t₁ ∈ [t, ..., t+Δt], und (x, y) Koordinaten von Punkten auf dem Teil der Erdoberfläche angeben, ein drittes Mittel zur Ermittlung eines prädizierten zeitlichen Verlaufs einer flächigen Wasserstandsverteilung WV(t₁, x, y) auf dem Teil der Erdoberfläche auf Basis des 3D-Geländemodells und der prädizierten örtlichen Regenmengen R(t₁, x, y), und ein viertes Mittel zur Ausgabe einer Warnung WAR dann, wenn die Wasserstandverteilung WV(t₁, x, y) im betrachteten prognostizierten Zeitverlauf [t, ..., t+Δt] einen für den Teil der Erdoberfläche lokal vorgegebenen Grenzwert G(x, y) übersteigt, wobei die angeführten Mittel zum Datenaustausch miteinander vernetzt sind.

Das 3D-Geländemodell gibt zumindest die 3D-Erdoberfläche an, bei der sich jeder Punkt der 3D-Erdoberfläche bspw. mittels kartesischer Koordinaten x, y, z darstellen lässt. Die nachfolgenden Ausführungen beziehen sich der Einfachheit halber auf ein kartesisches Koordinatensystem. Natürlich umfasst der vorgestellte Erfindungsgedanke auch andere Koordinatensysteme, wobei eine Umformulierung für einen Fachmann ohne Schwierigkeiten möglich ist. Das 3D-Geländemodell ist vorteilhaft auf Basis flugzeuggetragener oder satellitengetragener Messungen, insbesondere Radarmessungen ermittelt worden.

Die Wasserstandsverteilung WV(t₁, x, y) gibt den prädizierten, d.h. den für einen zukünftigen Zeitpunkt t₁ vorhergesagten Wasserstand an einer Position (x, y, z) der Erdoberfläche bspw. in [cm] oder [m] an, vorteilhaft gemessen von der Erdoberfläche in entgegen gesetzter Richtung zum Erdmittelpunkt. Beispielsweise bedeutet WV(t₁, x, y) = 0,5 m ein Wasserstand von 0,5 m über der Erdoberfläche an der Position (x, y, z) zur Zeit t₁.

Die Grenzwerte G(x, y) für die Auslösung einer Warnung werden vorteilhaft auf Basis von Erfahrungswerten aus vergangenen Hochwasserereignissen und/oder auf Basis von Simulationen verschiedener Hochwasserszenarios und einer Abschätzung der daraus resultierenden potentiellen Gefährdungen für Menschen und Objekte (bspw. Häuser, Kraftwerke, Infrastruktureinrichtungen, etc.) festgelegt.

Das vierte Mittel zur Ausgabe der Warnung WAR ist vorteilhaft zur optischen Ausgabe und/oder zur akustischen Ausgabe der Warnung eingerichtet und bspw. als Monitor, Bildschirm, Display, SMS, eMail, oder als akustischer Wandler ausgeführt.

Eine vorteilhafte Weiterbildung des Systems zeichnet sich dadurch aus, dass das digitale 3D-Geländemodell neben der Höhe für den Teil der Erdoberfläche eine, mehrere oder alle der nachfolgenden Information/en umfasst, wobei diese Information/en von dem dritten Mittel bei der Ermittlung der prädizierten Wasserstandsverteilung WV(t₁, x, y) berücksichtigt werden:
- lokale Oberflächenrauhigkeiten z₀(x, y, z) des Teils der Erdoberfläche,
- lokale Materialarten MA(x, y, d=[0, Δd]) einer Oberflächenschicht mit der Dicke Δd des Teils der Erdoberfläche und die Materialarten MA(x, y) beschreibende physikalische Parameter P_{MA(x, y)} bspw. Fließwiderstand, Porosität, Rauhigkeitsbeiwert, hydraulischer Radius, Wasserspeicherkapazität,
- Bodentiefenprofile BP_{MA}(MA(x, y), d) der lokalen Materialarten MA(x, y, d) und zugehörige physikalische Parameter (Beispiele siehe zuvor),
- lokale Wasserspeicherkapazitäten WSK(x, y, d=[0, Δd]) der Oberflächenschicht mit der Dicke Δd,
- Bodentiefenprofile BP_{WSK}(WSK(x, y), d) der lokalen Wasserspeicherkapazitäten WSK(x, y, z, d).
- Temperatur T(x,y) in °C

Der Parameter d gibt jeweils eine Bodentiefe für einen Punkt (x, y, z) der Erdoberfläche an, vorteilhaft gemessen jeweils von der Erdoberfläche (d = 0) in Richtung Erdmittelpunkt. Δd gibt die Dicke der Oberflächenschicht an und liegt bevorzugt im Bereich von [0, 50 cm], oder [0, 20 cm] oder [0, 10 cm].

Die lokale Wasserspeicherkapazität WSK(x, y, d=[0, Δd]) der Oberflächenschicht wie auch die Bodentiefenprofile BP_{WSK}(WSK(x, y), d) der lokalen Wasserspeicherkapazität sind vorteilhaft zeitabhängig, d.h. genauer gesagt abhängig von vergangenen Regenmengen R(t₂, x, y), mit t₂ < t.

Durch die Bodentiefenprofile der lokalen Materialarten und der zugeordneten lokalen Wasserspeicherkapazitäten ist es insbesondere möglich, Wasserausbreitung aufgrund von Regenniederschlag auch im Boden, d.h. unterhalb der Erdoberfläche bei der Ermittlung der Wasserstandverteilung WV(t₁, x, y) zu berücksichtigen. Vorteilhaft wird abhängig von den Bodentiefenprofilen der lokalen Materialarten und der zugeordneten lokalen Wasserspeicherkapazitäten ein Fließgefälle ermittelt, das ebenfalls zeitabhängig, genauer gesagt abhängig von vergangenen Regenmengen R(t₂, x, y), ist, mit t₂ < t. Weiterhin vorteilhaft wird bei der Ermittlung der Wasserstandverteilung WV(t₁, x, y) ein lokaler Grundwasserspiegel berücksichtigt.

Eine Weiterbildung zeichnet sich dadurch aus, dass ein oder mehrere fünfte Mittel zur Messung einer flächigen Verteilung von aktuellen Regenmengen R(t, x, y) auf dem Teil der Erdoberfläche vorhanden sind, und das zweite Mittel die örtliche Verteilung der aktuellen Regenmengen R(t, x, y) zur Ermittlung der prädizierten örtlichen Regenmengen R(t₁, x, y) berücksichtigt. Der Begriff Regenmenge und Niederschlagsmenge werden vorliegend synonym verwendet, wobei unter Niederschlag ausschließlich Regen, d.h. Wasser in flüssiger Form verstanden wird.

Das fünfte Mittel ist vorteilhaft als auf dem Teil der Erdoberfläche verteilt angeordnete Niederschlagsmesseinrichtungen und/oder als ein oder mehrere Regenradare ausgebildet. Die Niederschlagsmesseinrichtungen messen vorteilhaft automatisiert die Regenmenge, typischerweise angegeben als Liter/ Quadratmeter = mm. Mit einem Regenradar können Niederschlagsintensitäten flächendeckend ermittelt und daraus die Niederschlagsmengen geschätzt werden.

Vorteilhaft werden von dem zweiten Mittel zum Prädizieren des zeitlichen Verlaufs der flächigen Verteilung von Regenmengen R(t₁, x, y) prädizierte Niederschlagsdaten von zumindest einem Wettermodell genutzt. Das Wettermodell berücksichtigt vorteilhaft aktuelle Daten von Niederschlagsmesseinrichtungen. Dadurch kann eine flächendeckende Prädiktion der R(t₁, x, y) ermittelt werden.

Das vierte Mittel ist in einer vorteilhaften Weiterbildung derart ausgebildet und eingerichtet, dass mit der Warnung WAR zumindest eine Position P:= (x_{P}, y_{P}) eine Zeit t* ausgegeben wird, wobei die Zeit t* die Zeit angibt, zu der an der Position (x_{P}, y_{P}) der prädizierte Wasserstand WV(t*, x_{P}, y_{P}) den für die Position P:= (x_{P}, y_{P}) geltenden Grenzwert G(x_{P}, y_{P}) überschreitet, mit t* ∈ [t, ..., t+Δt]. Dies liefert dem Benutzer Angaben über die Position oder die Bereiche und die Zeiten, zu denen auf dem betrachteten Teil der Erdoberfläche kritische Wasserstände erreicht werden.

Das vierte Mittel ist in einer weiteren vorteilhaften Weiterbildung derart ausgebildet und eingerichtet, dass mit der Warnung WAR vorgegebene Informationen über einzuleitende Maßnahmen zur Eindämmung eines lokalen Hochwassers ausgegeben werden, wobei die Informationen zu den Maßnahmen abhängig vom Betrag der Grenzwertüberschreitung |WV(t*, x_{P}, y_{P}) - G(x_{P}, y_{P})| mit WV(t*, x_{P}, y_{P}) > G(x_{P}, y_{P}) im Prognosezeitraum [t, ..., t+Δt] von einer Datenbank bereitgestellt werden. Dies ermöglicht eine unverzügliche Ausgabe bspw. von Handlungsanweisungen, die dem Schutz von Menschen und Objekten dienen und bspw. von Einsatzkräften umgesetzt werden sollen. Die entsprechenden Informationen zu allen denkbaren Szenarien werden vorteilhaft über die Datenbank bereitgestellt.

Ein zweiter Aspekt der Erfindung betrifft ein Verfahren zur Warnung vor lokalen Hochwasserereignissen auf einem Teil der Erdoberfläche, mit folgenden Schritten. In einem ersten Schritt erfolgt ein Bereitstellen eines digitalen 3D-Geländemodells des Teils der Erdoberfläche. In einem zweiten Schritt erfolgt ein Prädizieren eines zeitlichen Verlaufs einer flächigen Verteilung von Regenmengen R(t₁, x, y), die auf dem Teil der Erdoberfläche niedergehen, wobei t eine aktuelle Zeit, t₁ eine Zeit im Intervall zwischen der aktuellen Zeit t und einem vorgegebenen zukünftigen Zeitpunkt t + Δt angibt: t₁ ∈ [t, ..., t+Δt], und (x, y) Koordinaten von Punkten auf dem Teil der Erdoberfläche angeben. In einem dritten Schritt erfolgt ein Ermitteln eines prädizierten zeitlichen Verlaufs einer flächigen Wasserstandsverteilung WV(t₁, x, y) auf dem Teil der Erdoberfläche auf Basis des 3D-Geländemodells und der prädizierten örtlichen Regenmengen R(t₁, x, y). In einem vierten Schritt erfolgt ein Ausgeben einer Warnung WAR dann, wenn die Wasserstandverteilung WV(t₁, x, y) im betrachteten prognostizierten Zeitverlauf [t, ..., t+Δt] einen von für den Teil der Erdoberfläche lokal vorgegebenen Grenzwert G(x, y) übersteigt.

Eine Weiterbildung des Verfahrens zeichnet sich dadurch aus, dass das digitale 3D-Geländemodell für den Teil der Erdoberfläche eine, mehrere oder alle der nachfolgenden Information/en umfasst, wobei diese vom dritten Mittel bei der Ermittlung der Wasserstandsverteilung WV(t₁, x, y) berücksichtigt werden: Oberflächenrauhigkeit z₀(x, y) des Teils der Erdoberfläche, lokale Materialart MA(x, y, d=[0, Δd]) einer Oberflächenschicht des Teils der Erdoberfläche und zugehörige physikalische Parameter P_{MA(x, y, z)}, Bodentiefenprofile BP_{MA}(MA(x, y), d) der lokalen Materialart und zugehörige physikalische Parameter, lokale Wasserspeicherkapazität WSK(x, y, d=[0, Δd]) der Oberflächenschicht, Bodentiefenprofile BP_{WSK}(WSK(x, y), d) der lokalen Wasserspeicherkapazität.

Eine Weiterbildung des Verfahrens zeichnet sich dadurch aus, dass eine flächige Verteilung von aktuellen Regenmengen R(t, x, y) auf dem Teil der Erdoberfläche gemessen wird, und die örtliche Verteilung der aktuellen Regenmengen R(t, x, y) bei der Ermittlung der prädizierten örtlichen Regenmengen R(t₁, x, y) berücksichtigt wird.

Eine Weiterbildung des Verfahrens zeichnet sich dadurch aus, dass mit der Warnung WAR zumindest eine Position P:= (x_{P}, y_{P}) und eine Zeit t* ausgegeben werden, wobei die Zeit t* die Zeit angibt, zu der an der Position P der Wasserstand WV(t*, x_{P}, y_{P}) den für die Position P:= (x_{P}, y_{P}) geltenden Grenzwert G(x_{P}, y_{P}) überschreitet, mit t* ∈ [t, ..., t+Δt].

Eine Weiterbildung des Verfahrens zeichnet sich dadurch aus, dass mit der Warnung WAR vorgegebene Informationen über einzuleitende Maßnahmen zur Eindämmung eines lokalen Hochwassers ausgegeben werden, wobei die Informationen zu den Maßnahmen abhängig vom Betrag der Grenzwertüberschreitung |WV(t*, x_{P}, y_{P}) - G(x_{P}, y_{P})| mit WV(t*, x_{P}, y_{P}) > G(x_{P}, y_{P}) im Prognosezeitraum [t, ..., t+Δt] von einer Datenbank bereitgestellt werden.

Weitere Weiterbildungen und zugeordnete Vorteile ergeben sich durch eine sinngemäße und analoge Übertragung der zu dem vorgeschlagenen System gemachten Ausführungen.

Die Aufgabe der Erfindung ist weiterhin gelöst durch ein Computersystem mit einer Datenverarbeitungsvorrichtung, wobei die Datenverarbeitungsvorrichtung derart ausgestaltet ist, dass ein Verfahren, wie vorstehend ausgeführt, auf der Datenverarbeitungsvorrichtung ausgeführt wird.

Zudem wird die Aufgabe der Erfindung gelöst durch ein digitales Speichermedium mit elektronisch lesbaren Steuersignalen, wobei die Steuersignale so mit einem programmierbaren Computersystem zusammenwirken können, dass ein Verfahren, wie vorstehend ausgeführt, ausgeführt wird.

Ferner wird die Aufgabe der Erfindung gelöst durch ein Computer-Programm-Produkt mit einem auf einem maschinenlesbaren Träger gespeicherten Programmcode zur Durchführung des Verfahrens, wie vorstehend ausgeführt, wenn der Programmcode auf einer Datenverarbeitungsvorrichtung ausgeführt wird.

Schließlich betrifft die Erfindung ein Computer-Programm mit Programmcodes zur Durchführung des Verfahrens, wie vorstehend ausgeführt, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: einen schematisierten Aufbau eines vorgeschlagenen Systems, und
- Fig. 2: einen schematisierten Ablauf eines vorgeschlagenen Verfahrens.

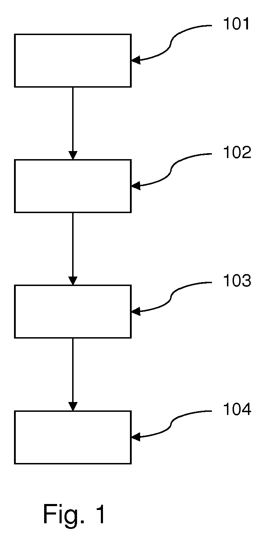

**Fig. 1** zeigt einen schematisierten Aufbau eines vorgeschlagenen System zur Warnung vor lokalen Hochwasserereignissen auf einem Teil der Erdoberfläche, umfassend: ein erstes Mittel 101 zur Bereitstellung eines digitalen 3D-Geländemodells des Teils der Erdoberfläche, ein zweites Mittel 102 zum Prädizieren eines zeitlichen Verlaufs einer flächigen Verteilung von Regenmengen R(t₁, x, y), die auf dem Teil der Erdoberfläche niedergehen, wobei t eine aktuelle Zeit, t₁ eine Zeit im Intervall zwischen der aktuellen Zeit t und einem vorgegebenen zukünftigen Zeitpunkt t + Δt angibt: t₁ ∈ [t, ..., t+Δt], und (x, y) Koordinaten von Punkten auf dem Teil der Erdoberfläche angeben, ein drittes Mittel 103 zur Ermittlung eines prädizierten zeitlichen Verlaufs einer Wasserstandsverteilung WV(t₁, x, y) auf dem Teil der Erdoberfläche auf Basis des 3D-Geländemodells und der prädizierten örtlichen Regenmengen R(t₁, x, y), und ein viertes Mittel 104 zur Ausgabe einer Warnung WAR dann, wenn die Wasserstandverteilung WV(t₁, x, y) im betrachteten prognostizierten Zeitverlauf [t, ..., t+Δt] einen von für den Teil der Erdoberfläche lokal vorgegebenen Grenzwert G(x, y) übersteigt, wobei die angeführten Mittel zum Datenaustausch miteinander vernetzt sind.

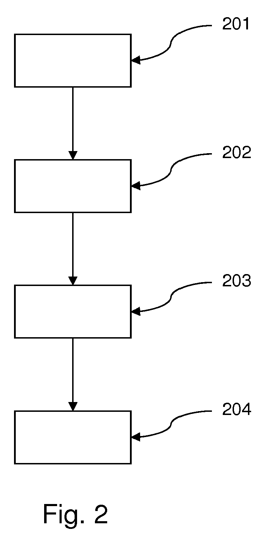

**Fig. 2** zeigt einen schematisierten Ablauf eines vorgeschlagenen Verfahrens zur Warnung vor lokalen Hochwasserereignissen auf einem Teil der Erdoberfläche, mit folgenden Schritten. In einem ersten Schritt 201 erfolgt ein Bereitstellen eines digitalen 3D-Geländemodells des Teils der Erdoberfläche. In einem zweiten Schritt 202 erfolgt ein Prädizieren eines zeitlichen Verlaufs einer flächigen Verteilung von Regenmengen R(t₁, x, y) die auf dem Teil der Erdoberfläche niedergehen , wobei t eine aktuelle Zeit, t₁ eine Zeit im Intervall zwischen der aktuellen Zeit t und einem vorgegebenen zukünftigen Zeitpunkt t + Δt angibt: t₁ ∈ [t, ..., t+Δt], und (x, y) Koordinaten von Punkten auf dem Teil der Erdoberfläche angeben. In einem dritten Schritt 203 erfolgt ein Ermitteln eines prädizierten zeitlichen Verlaufs einer Wasserstandsverteilung WV(t₁, x, y) auf dem Teil der Erdoberfläche auf Basis des 3D-Geländemodells und der prädizierten örtlichen Regenmengen R(t₁, x, y). In einem vierten Schritt 204 erfolgt ein Ausgeben 204 einer Warnung WAR dann, wenn die Wasserstandverteilung WV(t₁, x, y) im betrachteten prognostizierten Zeitverlauf [t, ..., t+Δt] einen von für den Teil der Erdoberfläche lokal vorgegebenen Grenzwert G(x, y) übersteigt.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird.

### Bezugszeichenliste

- 101: erstes Mittel, Schnittstelle, Datenspeichereinheit, Cloud
- 102: zweites Mittel, Niederschlagsprognosemittel, Computersimulationsmodell
- 103: drittes Mittel, Computer,
- 104: viertes Mittel zur akustischen und/oder optischen Ausgabe einer Warnung und ggf. weiterer Informationen
- 201 - 204: Verfahrensschritte

## Patentansprüche

1. System zur Warnung vor lokalen Hochwasserereignissen auf einem Teil der Erdoberfläche, umfassend:
- ein erstes Mittel (101) zur Bereitstellung eines digitalen 3D-Geländemodells des Teils der Erdoberfläche,
- ein zweites Mittel (102) zum Prädizieren eines zeitlichen Verlaufs einer flächigen Verteilung von Regenmengen R(t₁, x, y), die auf dem Teil der Erdoberfläche niedergehen, wobei t eine aktuelle Zeit, t₁ eine Zeit im Intervall zwischen der aktuellen Zeit t und einem vorgegebenen zukünftigen Zeitpunkt t + Δt angibt: t₁ ∈ [t, ..., t+Δt], und (x, y) Koordinaten von Punkten auf dem Teil der Erdoberfläche angeben,
- ein drittes Mittel (103) zur Ermittlung eines prädizierten zeitlichen Verlaufs einer flächigen Wasserstandsverteilung WV(t₁, x, y) auf dem Teil der Erdoberfläche auf Basis des 3D-Geländemodells und der prädizierten örtlichen Regenmengen R(t₁, x, y), und
- ein viertes Mittel (104) zur Ausgabe einer Warnung WAR dann, wenn die Wasserstandverteilung WV(t₁, x, y) im betrachteten prognostizierten Zeitverlauf [t, ..., t+Δt] einen von für den Teil der Erdoberfläche lokal vorgegebenen Grenzwert G(x, y) übersteigt,
wobei die angeführten Mittel zum Datenaustausch miteinander vernetzt sind.

2. System nach Anspruch 1,
**dadurch gekennzeichnet, dass** das digitale 3D-Geländemodell für den Teil der Erdoberfläche eine, mehrere oder alle der nachfolgenden Information/en umfasst, wobei diese vom dritten Mittel bei der Ermittlung der Wasserstandsverteilung WV(t₁, x, y) berücksichtigt werden:
- Oberflächenrauhigkeit des Teils der Erdoberfläche,
- lokale Materialart einer Oberflächenschicht des Teils der Erdoberfläche und zugehörige physikalische Parameter,
- Bodentiefenprofile der lokalen Materialart und zugehörige physikalische Parameter,
- lokale Wasserspeicherkapazität der Oberflächenschicht,
- Bodentiefenprofile der lokalen Wasserspeicherkapazität.

3. System nach einem der Ansprüche 1 bis 2,
**dadurch gekennzeichnet, dass** ein oder mehrere fünfte Mittel zur Messung einer flächigen Verteilung von aktuellen Regenmengen R(t, x, y) auf dem Teil der Erdoberfläche vorhanden sind, und das zweite Mittel (102) die örtliche Verteilung der aktuellen Regenmengen R(t, x, y) zur Ermittlung der prädizierten örtlichen Regenmengen R(t₁, x, y) berücksichtigt.

4. System nach einem der Ansprüche 1 bis 3,
**dadurch gekennzeichnet, dass** das 3D-Geländemodell auf Basis flugzeuggetragener oder satellitengetragener Messungen ermittelt ist.

5. System nach einem der Ansprüche 1 bis 4,
**dadurch gekennzeichnet, dass** das fünfte Mittel (105) auf dem Teil der Erdoberfläche verteilt angeordnete Niederschlagsmesseinrichtungen und/oder ein oder mehrere Regenradare umfasst.

6. Verfahren zur Warnung vor lokalen Hochwasserereignissen auf einem Teil der Erdoberfläche, mit folgenden Schritten:
- Bereitstellen (201) eines digitalen 3D-Geländemodells des Teils der Erdoberfläche,
- Prädizieren (202) eines zeitlichen Verlaufs einer flächigen Verteilung von Regenmengen R(t₁, x, y) die auf dem Teil der Erdoberfläche niedergehen , wobei t eine aktuelle Zeit, t₁ eine Zeit im Intervall zwischen der aktuellen Zeit t und einem vorgegebenen zukünftigen Zeitpunkt t + Δt angibt: t₁ ∈ [t, ..., t+Δt], und (x, yz) Koordinaten von Punkten auf dem Teil der Erdoberfläche angeben,
- Ermitteln (203) eines prädizierten zeitlichen Verlaufs einer flächigen Wasserstandsverteilung WV(t₁, x, y) auf dem Teil der Erdoberfläche auf Basis des 3D-Geländemodells und der prädizierten örtlichen Regenmengen R(t₁, x, y), und
- Ausgeben (204) einer Warnung WAR dann, wenn die Wasserstandverteilung WV(t₁, x, y) im betrachteten prognostizierten Zeitverlauf [t, ..., t+Δt] einen für den Teil der Erdoberfläche lokal vorgegebenen Grenzwert G(x, y) übersteigt.

7. Verfahren nach Anspruch 6,
**dadurch gekennzeichnet, dass** das digitale 3D-Geländemodell für den Teil der Erdoberfläche eine, mehrere oder alle der nachfolgenden Information/en umfasst, wobei diese vom dritten Mittel bei der Ermittlung der Wasserstandsverteilung WV(t₁, x, y) berücksichtigt werden:
- Oberflächenrauhigkeit des Teils der Erdoberfläche,
- lokale Materialart einer Oberflächenschicht des Teils der Erdoberfläche und zugehörige physikalische Parameter,
- Bodentiefenprofile der lokalen Materialart und zugehörige physikalische Parameter,
- lokale Wasserspeicherkapazität der Oberflächenschicht,
- Bodentiefenprofile der lokalen Wasserspeicherkapazität.

8. Verfahren nach einem der Ansprüche 6 oder 7,
**dadurch gekennzeichnet, dass** eine flächige Verteilung von aktuellen Regenmengen R(t, x, y) auf dem Teil der Erdoberfläche gemessen wird, und die örtliche Verteilung der aktuellen Regenmengen R(t, x, y) bei der Ermittlung der prädizierten örtlichen Regenmengen R(t₁, x, y) berücksichtigt wird.

9. Verfahren nach einem der Ansprüche 6 bis 8,
**dadurch gekennzeichnet, dass** mit der Warnung WAR zumindest eine Position P:= (x_{P}, y_{P}) und eine Zeit t* ausgegeben werden, wobei die Zeit t* die Zeit angibt, zu der an der Position P der Wasserstand WV(t*, x_{P}, y_{P}) den für die Position P:= (x_{P}, y_{P}) geltenden Grenzwert G(x_{P}, y_{P}) überschreitet, mit t* ∈ [t, ..., t+Δt].

10. Verfahren nach einem der Ansprüche 6 bis 9,
**dadurch gekennzeichnet, dass** mit der Warnung WAR vorgegebene Informationen über einzuleitende Maßnahmen zur Eindämmung eines lokalen Hochwassers ausgegeben werden, wobei die Informationen zu den Maßnahmen abhängig vom Betrag der Grenzwertüberschreitung IWV(t*, x_{P}, y_{P}) - G(x_{P}, y_{P})| mit WV(t*, x_{P}, y_{P}) > G(x_{P}, y_{P}) im Prognosezeitraum [t, ..., t+Δt] von einer Datenbank bereitgestellt werden.
